# EUROPEAN PATENT APPLICATION

(11) **EP 4 431 896 A1**
(43) Date of publication of application: **18.09.2024**
(21) Application number: 23162352.1
(22) Date of filing: 16.03.2023
(51) Int. Cl.: G01L 9/00, G01L 9/04, G01L 11/02, G01L 19/00, B67D 99/00, G01L 9/16

(54) **DEVICE FOR MEASURING A PRESSURE IN AN INTERIOR CHAMBER OF A PRESSURE VESSEL AND PRESSURE VESSEL EQUIPPED WITH SUCH A DEVICE**

(71) Applicant: Worthington Cylinders GmbH, 3291 Kienberg b. Gaming (AT)
(72) Inventor: Blondeau, Jean, 12555 Berlin (DE)
(74) Representative: Schwarz & Partner Patentanwälte GmbH

(57) **Abstract**

A device (10) for measuring a pressure (P) in an interior chamber (7) of a pressure vessel (1) comprises a strain gauge (11) and a temperature sensor (12) affixable to an outer surface (2a) of a wall (2) defining the interior chamber (7). The strain gauge (11) senses pressure-induced deformation of the wall (2) and generates a deformation output signal (11a). The temperature sensor (12) senses the temperature of the wall (2) and generates a temperature output signal (12a). A processing (13) unit receives the deformation output signal (11a) and the temperature output signal (12a) and comprises computational means (14) configured to generate a pressure signal (20) based on the deformation output signal (11a) and the temperature output signal (12a). A pressure vessel (1) is equipped with the device (10) for measuring a pressure (P) in the interior chamber (7).

## Description

The invention relates to the measurement of a pressure exerted by a fluid in an interior chamber of a pressure vessel, such as a gas cylinder containing compressed gas.

The common method to measure a pressure exerted by a fluid in an interior chamber of a pressure vessel is installing a pressure sensor either in the interior chamber of the vessel or as an interface between the interior chamber and the outside of the vessel. The pressure sensor is at least partly in direct contact with the fluid inside the interior chamber.

Common pressure sensor technologies are for example:
- Measurement of the deformation of a membrane (strain gauges or bending bars)
- Measurement of deformation of a bended tube
- Measurement of the damping effect on a vibrating element in the fluid
- Measurement of the height of a liquid column.

For instance, document US 2009/0279391 A1 discloses an apparatus for measuring pressure inside a vessel using a magnetostrictive acoustic transducer. The apparatus includes a magnetostrictive acoustic transducer, including an exciting coil unit wound on a first magnetization yoke disposed on an outer position of a vessel, a receiving coil unit wound on the first magnetization yoke, and a vibration unit disposed on an inner position of the vessel in which the first magnetization yoke is installed; a control unit for Supplying a predetermined excitation current signal to the exciting coil unit; and a pressure measuring unit for measuring an internal pressure of the vessel based on an ultrasonic wave signal received by the receiving coil unit and an excitation current signal into the exciting coil unit.

Other conventional pressure sensors that are in direct contact with the fluid whose pressure is to be measured comprise a membrane. One side of the membrane is in contact with the pressurized fluid, while the other side of the membrane contacts a pressure reference (environmental atmosphere or vacuum). The measurement is derived from the deformation of the membrane.

In the case of vessels under pressure, a pressure sensor is installed on or in the vessel, such that the pressure sensor is in contact with the fluid inside the vessel. Commonly, the pressure sensor is installed at the fluid outlet of the vessel. The fixation of the sensor must be tight to avoid leakages. The sensor itself and the materials it is made of shall not influence the purity of the pressurized fluid and must be immune to the measured fluid. Because of this the pressure sensors or manometers must be designed for compatibility with the measured fluid, which in turn makes the design of standardized sensors difficult and expensive.

In view of these disadvantages of known pressure measuring technologies, there is still a need for devices for the measurement of a pressure exerted by a fluid in an interior chamber of a pressure vessel, which avoid the above-described drawbacks.

This object is achieved by means of a device for measuring a pressure in an interior chamber of a pressure vessel, the device comprising:
a strain gauge affixable to an outer surface of a wall defining the interior chamber, the strain gauge being configured to sense pressure-induced deformation of the wall and to generate a deformation output signal that corresponds to the sensed deformation,
a temperature sensor affixable to the outer surface of the wall defining the interior chamber, the temperature sensor being configured to sense the temperature of the wall and to generate a temperature output signal,
a processing unit being configured to receive the deformation output signal from the strain gauge and the temperature output signal from the temperature sensor,
characterized in that the processing unit comprises computational means being configured to generate a pressure signal based on the deformation output signal and the temperature output signal.

The invention further solves the above-mentioned problems by providing a pressure vessel comprising an interior chamber defined by a wall for containing a pressurized fluid, wherein preferably the pressure vessel is configured as a pressure gas cylinder, wherein the pressure vessel comprises a device for measuring a pressure in the interior chamber of the pressure vessel according to the present invention, wherein the strain gauge and the temperature sensor are affixed to an outer surface of the wall defining the interior chamber, such that neither the strain gauge nor the temperature sensor is in contact with a fluid contained in the interior chamber of the vessel.

A fluid, such as a pressurized gas, contained in the interior chamber of a pressure vessel exerts a strain onto the wall defining the interior chamber. The strain onto the wall depends on the pressure inside the interior chamber. Measuring this strain, which causes a deformation of the wall, by means of a strain gauge together with the temperature of the wall by means of a temperature sensor allows the processing unit to calculate the pressure of the fluid inside the interior chamber.

The present invention advantageously provides a way of measuring the pressure inside the interior chamber of a vessel without physical contact to the fluid inside the vessel. The invention does not require any valve opening action to allow the measurement. Further, it does not require any technical or design changes to the vessel. Another advantage of the invention is that existing vessels can be retrofitted with the device of the present invention.

Generally, a strain gauge is a device used to measure the strain (deformation) on a structure caused by an applied load, in the present case the pressure exerted by the fluid onto the wall of the interior chamber that contains the fluid. There are several different types of strain gauges.

In one embodiment of the invention the strain gauge is an electrical strain gauge that converts a sensed deformation into an electrical deformation output signal.

Such an electrical strain gauge can be based on an electrical resistance change caused by deformation (mechanical strain). It can be configured as a metallic strain gauge, which is made from a thin film or wire of metal, such as nickel, gold, or aluminum. Such strain gauges are highly sensitive, easy to install, and have a long lifespan. Alternatively, the thin film is made from polyimide or other polymer material. They are lightweight, flexible, and have a high resistance to temperature changes.

The material that changes its electrical resistance in dependency of deformation can be bonded directly to the surface of the measured structure using a special adhesive. Alternatively, this material is affixed on a substrate that is bonded to the structure.

In another preferred embodiment of the invention the strain gauge is an optical strain gauge that converts a sensed deformation into an electrical deformation output signal. Optical strain gauges are a non-contact type of strain gauge, which uses optical techniques to measure the deformation of a structure. They are typically more accurate and have a wider measurement range than other types of strain gauges but are also more expensive. Optical strain gauges can be based on gratings applied to the structure whose deformation is to be measured. Alternatively, non-contact type fiber optic strain gauges are provided, which use the optical properties of a fiber to measure the deformation of a structure. They are highly resistant to electromagnetic interference and can be used in extreme environments.

In yet another preferred embodiment of the invention the strain gauge is configured to measure the magnetic polarization orientation of the material of the wall that defines the interior chamber of the vessel. There is a variety of techniques for measuring the magnetic polarization orientation of the material available, depending on the material and the desired level of precision. The most common technique is a magnetometer that measures the strength and direction of a magnetic field. A magnetometer can be used to measure the magnetic polarization orientation of a material by aligning the material with the sensor and measuring the magnetic field strength.

In another embodiment of the invention the strain gauge is configured as a strain gauge rosette comprising multiple strain gauges placed in a pattern to measure multi-axial strains. This embodiment allows measure strains in different directions.

In a preferred embodiment of the invention an amplifier for amplifying the deformation output signal from the strain gauge is provided. The electrical deformation output signal from the strain gauge is typically very small and must be amplified before it can be reliably measured by the processing unit.

For enhanced accuracy the computational means of the processing unit can be configured to generate the pressure signal additionally based on at least one of the material of the wall of the interior chamber, the geometry of the wall of the interior chamber, the position of the strain gauge sensor and the temperature sensor on the wall of the interior chamber, thermic effects from the material of the wall of the interior chamber and from the fluid inside the interior chamber, and/or pre-pressurization of the interior chamber.

In an embodiment of the invention, the computational means of the processing unit are configured to generate the pressure signal by look-up tables or mathematical functions for specified types of interior chambers of vessels, wherein the look-up tables or mathematical functions are based on previously carried out calibration strain measurements of the wall of the interior chamber at at least two different known pressures inside the interior chamber and at at least two different temperatures. Preferably, the computational means of the processing unit are configured to generate the pressure signal by a mathematical interpolation function, particularly on a linear interpolation function, based on two previously carried out strain measurements of the wall of the interior chamber at two different known pressures inside the interior chamber. It is preferred that one pressure is the environmental pressure and the other pressure is the nominal pressure of the interior chamber after filling, at a range of temperatures, comprising at least two different temperatures.

The device according to the invention may further include at least one of a telemetric date transmission module, a satellite position tracking module and/or input terminals configured to receive output signals from additional sensors, such as a shock sensor, or a vibration sensor.

Further details and advantages of the device for measuring a pressure in an interior chamber of a pressure vessel and the pressure vessel according to the invention will become more apparent in the following description and the accompanying drawings.
Figure 1 shows a schematic structure of the device for measuring a pressure in an interior chamber of a pressure vessel according to the invention; and
Figure 2 shows schematically a pressure vessel equipped with a device for measuring a pressure in an interior chamber of the pressure vessel according to the invention.

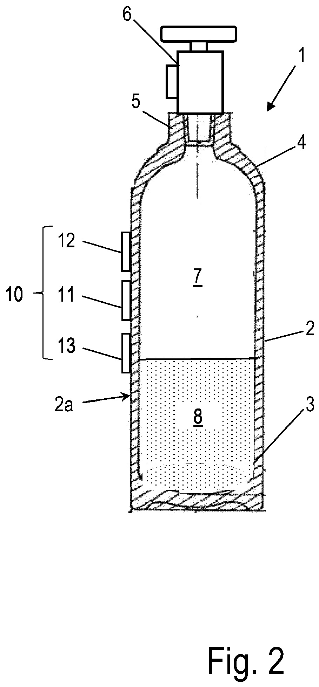

Fig. 2 shows a schematical longitudinal section of a pressure vessel 1 configured as a pressure gas cylinder. A gas cylinder is a pressure vessel 1 that is used to store and transport gases at high pressure. It is universally applicable, for example, in industry, welding, medicine, laboratories, the food and beverage industry, as fire-fighting equipment and for water treatment. The main parts of the gas cylinder include the cylinder wall 2 which is the main component of the gas cylinder, which is made from a strong and durable material, such as steel or aluminum, to withstand the high pressures of the gas inside. The cylinder wall 2 has a bottom 3 for placing the vessel 1 safely in an upright position. The cylinder wall 2 has a neck 5 extending from an end section of the cylinder wall 2 which is remote from the bottom 3 and formed as a shoulder 4. A valve 6 is attached to the neck 5 through a threaded connection. The valve 6 controls the flow of gas in and out of the cylinder. The cylinder wall 2 defines an interior chamber 7 of the pressure vessel 1.

A device 10 for measuring a pressure in the interior chamber 7 of the pressure vessel 1 is mounted onto the outer surface 2a of the cylinder wall 2 defining the interior chamber 7. The device 10 comprises a strain gauge 11 being configured to sense pressure-induced deformation of the wall 2 and to generate a deformation output signal 11a that corresponds to the sensed deformation of the wall 2, and a temperature sensor 12 being configured to sense the temperature of the wall 2 and to generate a temperature output signal 12a. The strain gauge 11 and the temperature sensor 12 are bonded to the outer surface 2a of the wall. The device 10 further comprises a processing unit 13 being configured to receive the deformation output signal 11a from the strain gauge 11 and the temperature output signal 12a from the temperature sensor 12. Neither the strain gauge 11, nor the temperature sensor 12 nor the processing unit 13 ever get in contact with a fluid 8 contained in the interior chamber 7 of the pressure vessel 1.

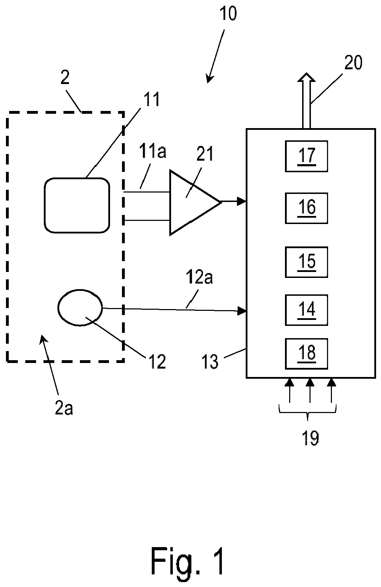

For further explanation of the device 10 for measuring a pressure in the interior chamber 7 reference is made to Fig. 1. The processing unit 13 comprises computational means 14 being configured to generate a pressure signal 20 based on the deformation output signal 11a and the temperature output signal 12a. The computational means 14 comprise a microcomputer, a random-access memory, a read-only memory for storing program instructions, input and output connections as required and other components conventional computational means are usually equipped with. The computational means 14 can be configured as an integrated microcontroller having all its components integrated in one housing. The processing unit 13 is further equipped with an electric power supply such as a battery.

In one embodiment the strain gauge 11 is an electrical strain gauge that converts a sensed deformation into an electrical deformation output signal. The electrical strain gauge 11 can be based on an electrical resistance change caused by deformation, wherein preferably the electrical strain gauge is a strain gauge which is made from a thin film or wire of metal, such as nickel, gold, or aluminum, or is made from a thin film of polyimide or other polymer material.

Alternatively, the strain gauge 11 is an optical strain gauge that converts a sensed deformation into an electrical deformation output signal. The optical strain gauge can be based on gratings or on optical fibers the optical properties of which change with mechanical strain.

In a further alternative, the strain gauge 11 is configured to measure a magnetic polarization orientation of the material of the wall that defines the interior chamber.

Preferably, the strain gauge 11 is configured as a strain gauge rosette comprising multiple strain gauges placed in a pattern to measure multi-axial strains.

Usually, the deformation output signal 11a from the strain gauge 11 has a very low signal level and is therefore boosted by an amplifier 21.

For achieving higher accuracy of the pressure signal 20, the computational means 14 of the processing unit 13 can be configured to generate the pressure signal 20 not only on the base of the deformation output signal 11a and the temperature output signal 12a, but additionally based on at least one of the material of the wall 2 of the interior chamber 7, the geometry of the wall 2 of the interior chamber 7, the position of the strain gauge 11 and the temperature sensor 12 on the wall 2 of the interior chamber 7, thermic effects from the material of the wall 2 of the interior chamber 7 and from the fluid 8 inside the interior chamber 7, and/or pre-pressurization of the interior chamber 7. Pre-pressurization of the interior chamber 7 considers remaining pressure in "empty" state of the interior chamber 7.

The computational means 14 of the processing unit 13 are configured to generate the pressure signal P on the basis of look-up tables 16 or mathematical functions 15 set for specified types of interior chambers 7 of vessels 1, wherein the look-up tables 16 or mathematical functions 15 are based on previously carried out strain measurements of the wall 2 of the interior chamber 7 for at least two different known pressures P inside the interior chamber 7 and for at least two different temperatures. Such a previous calibration procedure yields more accurate results of the pressure computation and reduces the required computation power of the computational means 14.

In a preferred embodiment that requires even more reduced computational power of the computational means14 the computational means 14 are configured to generate the pressure signal 20 by applying a mathematical interpolation function 15, preferably a linear interpolation function 15, based on two previously carried out strain measurements of the wall 2 of the interior chamber 7 for two different known pressures P inside the interior chamber 7. One pressure is preferably the environmental pressure when the interior chamber 7 is empty and a valve 6 is open. The other pressure is preferably the nominal pressure of the interior chamber 7 after filling. The strain measurements are carried out at a range of temperatures comprising at least two different temperatures. This allows a compensation of temperature effects on the wall 2.

The processing unit 13 may further include a telemetric date transmission module 17 that transmits the calculated pressures P and other acquired data to a remote server, e.g., for analyzing and presenting the data in the world wide web. Additional acquired data comprise position data, when the processing unit 13 includes a satellite position tracking module 18. In the depicted embodiment the processing unit 13 includes input terminals 19 configured to receive output signals from additional sensors, such as a shock sensor or a vibration sensor or a sensor for detecting surrounding gas, etc.

## Claims

1. A device (10) for measuring a pressure (P) in an interior chamber (7) of a pressure vessel (1), the device (10) comprising:
a strain gauge (11) affixable to an outer surface (2a) of a wall (2) defining the interior chamber (7), the strain gauge (11) being configured to sense pressure-induced deformation of the wall (2) and to generate a deformation output signal (11a) that corresponds to the sensed deformation,
a temperature sensor (12) affixable to the outer surface (2a) of the wall (2) defining the interior chamber (7), the temperature sensor (12) being configured to sense the temperature of the wall (2) and to generate a temperature output signal (12a),
a processing unit (14) being configured to receive the deformation output signal (11a) from the strain gauge (11) and the temperature output signal (12a) from the temperature sensor (12),
**characterized in that** the processing unit (13) comprises computational means (14) being configured to generate a pressure signal (20) based on the deformation output signal (11a) and the temperature output signal (12a).

2. The device according to claim 1, wherein the strain gauge (11) is an electrical strain gauge that converts a sensed deformation into an electrical deformation output signal.

3. The device according to claim 2, wherein the electrical strain gauge (11) is based on an electrical resistance change caused by deformation, wherein preferably the electrical strain gauge is a strain gauge which is made from a thin film or wire of metal, such as nickel, gold, or aluminum, or is made from a thin film of polyimide or other polymer material.

4. The device according to claim 1, wherein the strain gauge (11) is an optical strain gauge that converts a sensed deformation into an electrical deformation output signal.

5. The device according to claim 4, wherein the optical strain gauge is based on gratings or on optical fibers the optical properties of which change with mechanical strain.

6. The device according to claim 1, wherein the strain gauge (11) is configured to measure a magnetic polarization orientation of the material of the wall that defines the interior chamber.

7. The device according to any one of claims 1 to 6, wherein the strain gauge (11) is configured as a strain gauge rosette comprising multiple strain gauges placed in a pattern to measure multi-axial strains.

8. The device according to any one of claims 1 to 7, further comprising an amplifier (21) for amplifying the deformation output signal (11a) from the strain gauge (11).

9. The device according to any one of claims 1 to 8, wherein the computational means (14) of the processing unit (13) are configured to generate the pressure signal (20) additionally based on at least one of the material of the wall (2) of the interior chamber (7), the geometry of the wall (2) of the interior chamber (7), the position of the strain gauge (11) and the temperature sensor (12) on the wall (2) of the interior chamber (7), thermic effects from the material of the wall (2) of the interior chamber (7) and from the fluid (8) inside the interior chamber (7), and/or pre-pressurization of the interior chamber (7).

10. The device according to any one of claims 1 to 9, wherein the computational means (14) of the processing unit (13) are configured to generate the pressure signal (P) on the basis of look-up tables (16) or mathematical functions (15) set for specified types of interior chambers (7) of vessels (1), wherein the look-up tables (16) or mathematical functions (15) are based on previously carried out strain measurements of the wall (2) of the interior chamber (7) for at least two different known pressures (P) inside the interior chamber (7) and for at least two different temperatures.

11. The device according to claim 10, wherein the computational means (14) of the processing unit (13) are configured to generate the pressure signal (20) by applying a mathematical interpolation function (15), preferably a linear interpolation function (15), based on two previously carried out strain measurements of the wall (2) of the interior chamber (7) for two different known pressures (P) inside the interior chamber (7), one pressure preferably being the environmental pressure and the other pressure being the nominal pressure of the interior chamber (7) after filling, at a range of temperatures comprising at least two different temperatures.

12. The device according to any one of claims 1 to 11, wherein the processing unit (13) includes a telemetric date transmission module (17).

13. The device according to any one of claims 1 to 12, wherein the processing unit (13) includes a satellite position tracking module (18).

14. The device according to any one of claims 1 to 13, wherein the processing unit (13) includes input terminals (19) configured to receive output signals from additional sensors, such as a shock sensor or a vibration sensor.

15. A pressure vessel (1) comprising an interior chamber (7) defined by a wall (2) for containing a pressurized fluid (8), wherein preferably the pressure vessel (1) is configured as a pressure gas cylinder, **characterized in that** the pressure vessel (1) comprises a device (10) for measuring a pressure (P) in the interior chamber (7) of the pressure vessel (1) according to any one of claims 1 to 14, wherein the strain gauge (11) and the temperature sensor (12) are affixed to an outer surface (2a) of the wall (2) defining the interior chamber (7), such that neither the strain gauge (11) nor the temperature sensor (12) is in contact with a fluid (8) contained in the interior chamber (7) of the pressure vessel (1).
